# EUROPÄISCHE PATENTSCHRIFT

(11) **EP 4 050 437 B1**
(45) Veröffentlichungstag und Bekanntmachung des Hinweises auf die Patenterteilung: **01.07.2026**
(21) Anmeldenummer: 21159413.0
(22) Anmeldetag: 25.02.2021
(51) Int. Cl.: A61C 13/00, B24B 29/02, A61C 3/06

(54) **VERFAHREN ZUM BETRIEB EINER DENTAL-POLIERVORRICHTUNG SOWIE DENTAL-POLIERVORRICHTUNG**
DENTAL POLISHING DEVICE AND METHOD FOR OPERATING A DENTAL POLISHING DEVICE
PROCÉDÉ DE FONCTIONNEMENT D'UN DISPOSITIF DE POLISSAGE DENTAIRE, AINSI QUE DISPOSITIF DE POLISSAGE DENTAIRE

(43) Veröffentlichungstag der Anmeldung: 31.08.2022
(73) Patentinhaber: Ivoclar Vivadent AG, 9494 Schaan (LI)
(72) Erfinder: GASSNER, Sebastian, 9497 Triesenberg (LI)
(74) Vertreter: Baldus, Oliver

(56) Entgegenhaltungen:
- EP-B1- 1 743 738
- EP-B1- 2 462 894
- US-A- 4 860 215
- US-A1- 2013 302 751
- AHMAD ET AL: "An evaluation of the effects of handpiece speed, abrasive characteristics, and polishing load on the flexural strength of polished ceramics", THE JOURNAL OF PROSTHETIC DENTISTRY, ELSEVIER, AMSTERDAM, NL, vol. 94, no. 5, 1 November 2005 (2005-11-01), pages 421 - 429, XP005155566, ISSN: 0022-3913, DOI: 10.1016/J.PROSDENT.2005.08.014
- BALIJEPALLI A ET AL: "A haptic based virtual grinding tool", HAPTIC INTERFACES FOR VIRTUAL ENVIRONMENT AND TELEOPERATOR SYSTEMS, 20 03. HAPTICS 2003. PROCEEDINGS. 11TH SYMPOSIUM ON 22 AND 23 MAR 2003, PISCATAWAY, NJ, USA,IEEE, 1 January 2003 (2003-01-01), pages 390 - 396, XP010637714, ISBN: 978-0-7695-1890-9

## Beschreibung

Die vorliegende Erfindung betrifft ein Verfahren zum Betrieb einer Dental-Poliervorrichtung gemäß dem Oberbegriff von Anspruch 1 und eine Dental-Poliervorrichtung gemäß dem Oberbegriff von Anspruch 11.

Die Druckschrift Ahmad et Al.: "An evaluation of the effects of handpiece speed, abrasive characteristics, and polishing load on the flexural strength of polished ceramics", The Journal of Prosthetic Dentistry, Elsevier, Amsterdam, NL, Bd. 94, Nr. 5, 1. November 2005 (2005-11-01), Seiten 421-429, XP005155566, ISSN:0022-3913, DOI: 10.1016/J.PROSDENT.2005.08.014 betrifft eine Evaluation der Effekte einer Handstückgeschwindigkeit, Abrasionseigenschaften, und Polierbelastung auf die Biegefestigkeit polierter Keramiken. Hierzu wird eine benutzerindividuelle Maschine verwendet, die standardisierte Belastungen und Geschwindigkeiten anwendet, die den durchschnittlichen Belastungen und Geschwindigkeiten von erfahrenen Zahnärzten entsprechen.

Die Druckschrift US 2013/302751 A1 betrifft Anordnungen und verwandte Verfahren für Schleifanwendungen zum Formen, Schleifen und Polieren von Dentalmaterialien. Schleifscheiben und Dorne wurden in ein luftbetriebenes Handstück mit niedriger Geschwindigkeit eingebaut.

Die Druckschrift Balijepalli A. et Al: "A Haptic Based Virtual Grinding Tool", Haptic Interfaces for virtual Environment and Teleoperator Systems, 20 03. Haptics 2003 Proceedings. 11th Symposium on 22 and 23 Mar 2003, Piscataway, NJ, USA, IEEE, 1. Januar 2003 (2003-01-01), Seiten 390-396, Xp010637714, ISBN: 978-0-7695-1890-9;betrifft haptikbasiertes virtuelles Schleifwerkzeug. Robotisches Schleifen oder Polieren stellen kontaktbasierte Bedienformen dar, die Kontaktkräfte beinhalten.

Die Druckschrift EP 1743738 B1 betrifft ein ein Verfahren zur Regelung eines Anpressdrucks eines Werkzeugs an ein Werkstück in einer Werkzeugmaschine sowie eine Regeleinheit für eine Werkzeugmaschine. Des Weiteren betrifft die Erfindung eine Werkzeugmaschine zur Bearbeitung eines Werkstücks.

Die Druckschrift EP 2462894 B1 betrifft ein Verfahren zur Materialabtragenden Bearbeitung eines insbesondere flächigen Rohlings zur Herstellung von dentalen Werkstücken, wie insbesondere von Inlays, Kronen, Brücken, Stegen, Implantatsuprakonstruktionen, Prothesen, Modellen oder dergleichen.

Mittels Dental-Werkzeugmaschinen werden Dentalrestaurationsteile hergestellt, die in Hinblick auf die Herstellung in der Werkzeugmaschine in allgemeiner Form auch als Werkstücke bezeichnet werden können. Diese Werkstücke werden von der Werkzeugmaschine mittels eines abtragenden Verfahrens erzeugt. Hierzu gehört insbesondere das Fräsen, aber auch das Drehschleifen. Der besondere Vorteil des Drehschleifens für das Polieren liegt darin, dass das Werkzeug permanent in konstanter Bewegung ist. Ent- und Beschleunigungsphasen sind weniger stark ausgeprägt.

Die Herstellung erfolgt typischerweise numerisch gesteuert, also mittels einer CNC-Maschine. Diese führt das Werkzeug entlang einer vorgegebenen Bahn, einer Bewegungsbahn, an dem Werkstück vorbei. Die Relativbewegung erfolgt basierend auf Fräsdaten, die die Bewegungsbahn vorgeben. Auch bei einer Bewegungsbahn mit feiner Auflösung von beispielsweise 0,05 mm verbleibt aber auf der Oberfläche des Werkstücks eine gewisse Rauigkeit. Dies gilt auch dann, wenn als letzter Schritt des eigentlichen Herstellvorgangs ein Schlichtfräsen mit einem ganz geringen Vortrieb eingesetzt wird.

Daher wird typischerweise nach dem eigentlichen Herstellvorgang, also dem Fräsen oder Drehschleifen, poliert. Hierzu wird entweder eine separate Poliervorrichtung eingesetzt, oder die Werkzeugmaschine wird kurzerhand mit einem Polierwerkzeug bestückt.

Das Polierwerkzeug wird dann entlang einer speziellen Bewegungsbahn relativ zur Oberfläche des Werkstücks bewegt. Das Polierwerkzeug ist wesentlich weicher als beispielsweise ein Fräswerkzeug. Das Polierwerkzeug soll mit einem gewissen Druck an der Oberfläche des Werkstücks entlang geführt werden, so dass die Polierwirkung entsteht, die sich aus einem Umformen der Oberfläche des Werkstücks und einem Abtragen von Rauhigkeitsspitzen zusammensetzt.

Das Polierwerkzeug ist dann mit seinem Schaft in die Werkzeugmaschine eingespannt und trägt die Poliereinheit, bestehend aus einem Polierkern, der kreisrund und fest ist und der Polieranordnung, die den Polierkern umgibt und weicher als dieser ist.

Die Bewegungsbahn ist so gelegt, dass das Werkstück in die Polieranordnung, die den Polierkern umgibt, eintaucht. Typischerweise wird das Polierwerkzeug ausgetauscht, wenn es verschlissen ist, also keine ausreichende Polierwirkung mehr zeigt.

Dentalrestaurationsteile als Werkstücke können auch scharfe Kanten aufweisen. Ein Beispiel ist der der Gingiva zugewandte Rand einer Krone. An solchen Kanten verschleißt die Polieranordnung ausgesprochen schnell, wenn der Rand besonders scharfkantig ist.

Der Verschleiß der Polieranordnung ist manchmal sehr hoch. Daher ist es vorgeschlagen worden, vorsorglich die Polieranordnung und das Polierwerkzeug nach der zumindest anzunehmenden Standzeit auszutauschen, auch wenn damit in vielen Fällen ein vorzeitiges Austauschen und somit höhere Kosten in Kauf genommen werden.

Deshalb ist es auch vorgeschlagen worden, zur Verbesserung der Ausnutzung die Genauigkeit der Bewegungsbahn des Polierwerkzeug zu erhöhen, jedoch ohne die erhoffte wesentliche Verbesserung.

Daher liegt der Erfindung die Aufgabe zugrunde, ein Verfahren zum Betrieb einer Dental-Poliervorrichtung gemäß dem Oberbegriff der Ansprüche 1 sowie eine Dental-Poliervorrichtung gemäß dem Oberbegriff von Anspruch 11 zu schaffen, das bzw. die eine bessere Ausnutzung der Polieranordnung ermöglicht, ohne dass Zusatzkosten entstehen. Diese Aufgabe wird durch einen Gegenstand nach dem Anspruch 1 oder 11 gelöst. Vorteilhafte Weiterbildungen ergeben sich aus den Unteransprüchen.

Mit dem Verfahren wird eine besondere numerisch gesteuerte Steuervorrichtung oder eine besonders eingestellte numerisch gesteuerte Steuervorrichtung verwendet. Diese führt die Polieranordnung entlang einer speziellen Bewegungsbahn an dem zu polierenden Werkstück entlang. Die Bewegungsbahn entspricht in der Ausprägung der Erfindung gemäß Anspruch 1 einem konstanten oder im Wesentlichen konstanten Tauchmaß des Werkstücks in die Polieranordnung. Es wird aber die Bewegungsbahn nachgestellt, basierend auf speziellen Prozessparametern. Die Prozessparameter können beispielsweise der Vortrieb sein, das Material des Werkstücks, die Oberfläche des Werkstücks, das Material der Polieranordnung, die Form der Polieranordnung und/oder der Andruck zwischen der Polieranordnung und dem Werkstück.

In der praktischen Realisierung wird eine Abhängigkeit zu Zeit oder Weg hergestellt. Diese Abhängigkeit wird in materialspezifischen Versuchen ermittelt, in Abhängigkeit der vorherigen Schlichtstrategie.

Zu einer Poliervorrichtung gehört eine Poliereinheit, die aus der Polieranordnung und dem Polierkern gebildet ist. Die Polieranordnung umgibt in an sich bekannter Weise den - festen - Polierkern, oder umgibt ihn mindestens teilweise.

Daneben gehört zur Poliervorrichtung auch das zu polierende Werkstück. Das Werkstück ist zu Beginn des Poliervorgangs unpoliert, aber fertig gefräst. Typischerweise ist es durch Fräsen - oder Drehschleifen - in einer Dental-Werkzeugmaschine hergestellt worden und polierbereit.

Alternativ kann das Werkstück auch anderweitig hergestellt sein und eines Poliervorgangs bedürfen.

Das Werkstück ist an einem Werkstückhalter gelagert, z.B. mittels einer Klebeverbindung, mittels einer Schraubverbindung oder mittels einer Spannvorrichtung. Der Halter wird in die für den Poliervorgang verwendete Werkzeugmaschine eingespannt. Es wird das Polierverfahren durchgeführt, bis das Werkstück ausreichend poliert ist.

In der Ausprägung der Erfindung gemäß Anspruch 3 wird auch mit einem konstanten oder im Wesentlichen konstanten Tauchmaß des Werkstücks gearbeitet. Zusätzlich wird jedoch mindestens eine Dimension, insbesondere der Durchmesser oder die radiale Erstreckung, der Polieranordnung gemessen. Alternativ können auch die Abmessungen des Werkstücks gemessen werden. Das Messen erfolgt über einen Sensor oder beispielsweise eine Kamera. Es wird nun von der speziellen Steuervorrichtung die Bewegungsbahn basierend auf dem Ergebnis der Messung nachgestellt.

Es ist auch eine indirekte Messung möglich: Zum Beispiel kann eine Schallmessung vorgenommen werden. Aus dem Messergebnis wird auf die Intensität des Kontaktes geschlossen, und damit indirekt auf den Verschleiß der Polieranordnung.

Insofern wird zunächst einmal eine von der Steuervorrichtung berechnete und als gut für die Polierwirkung beurteilte Bewegungsbahn mit einem konstanten Tauchmaß festgelegt. Von dieser Standard-Bewegungsbahn ausgehend wird nun eine Abweichung festgelegt.

Die Abweichung kann zu einem weniger tiefen Eintauchen oder zu einem stärkeren Eintauchen führen. Insofern wird die Bewegungsbahn nachgestellt. Das Nachstellen kann vorab einmal erfolgen, beispielsweise basierend auf Materialparameter des Werkstücks und/oder der Polieranordnung erfolgen. Oder beispielsweise basierend auf der Form der Polieranordnung. Z.B. lässt sich insofern die Polierwirkung einer scheibenförmigen Polieranordnung und einer kegelförmigen Polieranordnung optimieren.

Es lässt sich mit dieser Ausprägung auch der Werkzeugverschleiß berücksichtigen. Wenn das Werkzeug stärker verschlissen ist, wird das Tauchmaß erhöht, umso wieder die gleiche Polierwirkung zu erhalten.

Das Soll-Tauchmaß wird nicht erhöht. Das Tauchmaß wird nachgestellt, damit dieses wieder dem Ursprungswert entspricht. Die Nachstellung wird erhöht. Hier liegt die Definition zugrunde, dass das Tauchmaß von Original-Werkzeug, also dem Nenndurchmesser abhängig ist.

Mit dem Wort "Tauchmaß" ist hier das Maß des Eintauchens des Werkstücks und von dessen Oberfläche in eine Bewegungsbahn bezeichnet, die sich an der Oberfläche der Polieranordnung mit ihrem Nenndurchmesser, also in unbenutzten Zustand, ergibt, wenn die Bewegungsbahn ohne Werkstück überfahren wird.

Dieses Tauchmaß lässt sich vergleichsweise leicht nachstellen, da sowohl der Nenndurchmesser des - neuen - Werkzeugs, also der Polieranordnung, als auch die Oberfläche und damit die Kontur des Werkstücks bekannt ist.

Die Erhöhung des realen Tauchmaßes bei verschlissenem Werkzeug führt dann dazu, dass das Nachlassen der Polierwirkung durch den Werkzeugverschleiß kompensiert wird.

Es ist auch alternativ vorgesehen, das Nachstellen während des Poliervorganges vorzunehmen.

Hierzu ist ein Sensor oder eine Kamera vorgesehen. Der Sensor erfasst den Durchmesser oder eine sonstige radiale Erstreckung der Polieranordnung, oder aber Abmessungen des Werkstücks, und leitet das Messergebnis der Steuervorrichtung zu. Die Steuervorrichtung stellt die Bewegungsbahn dann dynamisch nach.

Auch mit dieser Maßnahme lässt sich die aktuelle Polierwirkung konstant halten, aber auch an die Poliersituation anpassen. Wenn eine Präparationsgrenze, z.B. ein gingivaler Rand einer Krone, poliert wird, kann die Steuervorrichtung das Tauchmaß reduzieren. Damit wird sowohl erreicht, dass der Werkzeugverschleiß signifikant geringer wird, als auch, dass der Kronenrand nicht über Gebühr abgetragen wird.

Ferner lässt sich damit sicherstellen, dass die Präparationsgrenze, beispielsweise der Kronenrand, nicht beim Polieren überhitzt wird.

Die gleiche Maßnahme ist möglich und sinnvoll, wenn mit einem spitzen Polierwerkzeug eine Innenecke des Werkstücks poliert werden soll.

Die Erfindung ist nicht auf die Neuherstellung einer solche Dental-Poliervorrichtung beschränkt. Vielmehr ist es auch möglich, eine
Dental-Werkzeugmaschine, wie eine Fräsmaschine zu verwenden und diese Dental-Werkzeugmaschine mit einer Dental-Poliervorrichtung nachzurüsten. Hierzu wird die CAM-Software der Werkzeugmaschine geändert oder neu installiert und die Werkzeugmaschine mit einem Polierwerkzeug bestückt.

Das Update der Software realisiert dann die Steuervorrichtung, mit welcher ein Tauchmaß basierend auf Prozessparametern, oder basierend auf dem Messergebnis eines Sensors, nachstellbar ist. Zu der aufzufrischen CAM-Software kann auch die Firmware der Werkzeugmaschine gehören.

Alternativ ist es auch möglich, einen Poliertreiber zu realisieren, über den die Bewegungsdaten der Werkzeugmaschine so beeinflusst werden, dass anstelle der den Bewegungsdaten entsprechenden Bewegungsbahn eine um das Tauchmaß versetzte Bewegungsbahn durchfahren wird.

In weiterer Ausprägung der Erfindung ist eine CAM-Software für eine Dental-Werkzeugmaschine vorgesehen, die die Software die Dental-Werkzeugmaschine zu einer Dental-Poliervorrichtung nachrüstet. Die CAM-Software realisiert eine Steuervorrichtung, oder rüstet diese mittels eines Updates nach, mit welcher ein Tauchmaß basierend auf Prozessparametern, oder basierend auf dem Messergebnis eines Sensors, nachgestellt wird.

Eine Keramik für dentale Zwecke kann ausgesprochen hart sein. Ein Beispiel hierfür ist eine Krone aus Lithiumdisilikat. Das zugehörige Polierwerkzeug dreht sich beispielsweise mit 10000 Umdrehungen pro Minute und übt eine Anpresskraft von 4N aus. Dies führt zu einem signifikanten Verschleiß.

Wenn die erwünschte Anpresskraft beispielsweise 4N betragen soll und beispielsweise die gemittelte Federkonstante 10N/mm betragen kann, wird zunächst als Start-Tauchmaß durch die Steuervorrichtung ein Wert von 0,4mm festgelegt. In Abhängigkeit von den Verschleißeigenschaften werden die Parameter für die Nachstellung des Tauchmaßes empirisch ermittelt.

Bei einer Drehzahl von ca. 9000 U/min ist eine Nachstellung des Tauchmaßes in Höhe von 4µm/s bzw. 0,2µm/mm realistisch. Bei einer Polierdauer von 3 Minuten führt eine relativ konstante Bahngeschwindigkeit von 20mm/s zu einer Bearbeitungsbahn mit einer Länge von 3600mm. Die maximale Nachstellung des Tauchmaßes beträgt somit in beiden Fällen 720µm, egal ob eine Parametrisierung von 4µm/s oder 0,2µm/mm gewählt wird. Diese Werte sind lediglich beispielhaft zu verstehen, um die Zusammenhänge zu erläutern. Der Bereich der Nachstellung kann stark unterschiedlich sein, z.B. zwischen 0,5µm/s und 20 µm/s bzw. zwischen 50nm/mm und 1,5 µm/mm betragen. Auch kann das Start-Tauchmaßes im Bereich zwischen 50µmm und 1.5mm liegen.

Ferner ist es bei Zähnen wichtig, dass der Materialabtrag an der Restauration auf das absolute Minimum beschränkt wird und keine Konturveränderungen an der Restauration vorgenommen werden.

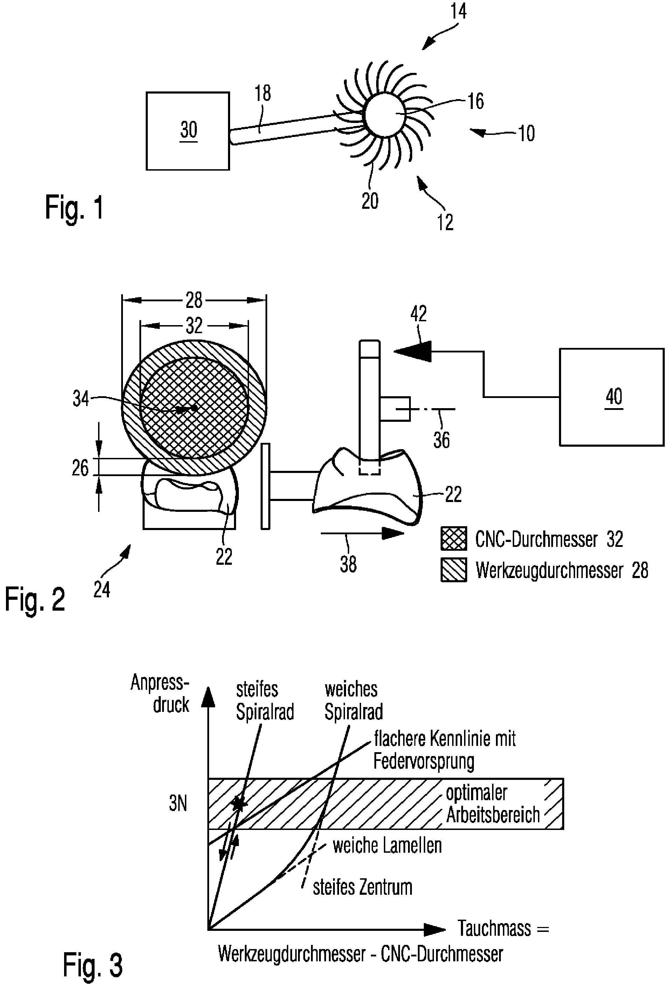

Bei einem konventionellen Schleifprozessen taucht das Werkzeug bis zum Kontakt mit der finalen Geometrie des Werkstücks in den Rohling, aus dem das Werkstück und dann das fertige Restaurationsteil erzeugt wird, ein. Bis auf einen geringen Verschleiß am Werkzeug findet der Materialabtrag vorwiegend am Rohling statt. Bei dem Verfahren, das eine Politur basierend auf NC-Daten umfasst, verfügt das Werkstück bereits über seine finale Geometrie. Das Verfahren erhöht ausschließlich die Oberflächenqualität. Wird das Werkzeug wie bei konventionellen Bearbeitungsprozessen über die Oberfläche geführt, kommt es zu keiner ausreichenden Kontaktkraft zwischen Werkzeug und Werkstück. Bei der Erfindung werden die benötigten Kontaktkräfte für den Polierprozess erreicht, indem das Werkstück um ein bestimmtes Tauchmaß in das rotierende Werkzeug, das die Polieranordnung aufweist, eintaucht. Das Tauchmaß ist bestimmt über die theoretische Eintauchtiefe in die Silhouette des unbelasteten rotierenden Werkzeuges (Fig. 2).

Da der Materialabtrag vorwiegend am Werkzeug und nicht am Werkstück erfolgt, wird der Abstand zwischen einem Werkzeugreferenzpunkt und Werkstückgeometrie stets verringert, um das Tauchmaß in einem konstanten Bereich zu halten. Auch bei Werkzeugen mit hohem Verschleiss wird dadurch das Tauchmaß und somit eine ausreichend hohe Kontaktkraft sichergestellt.

Die wichtigsten Stellgrössen für das Tauchmaß sind die Anpresskraft und die Steifigkeit des rotierenden Werkzeuges. Diese wiederum sind von vielen weiteren Faktoren des Werkzeuges und des Werkstücks abhängig. Korngrösse, Bindemittel, Verschleiss, Material, Oberflächenqualität, Festigkeit, Vorschub, Drehzahl oder Kühlmittel, um nur einige zu nennen.

Ein stabiler Polierprozess wird bevorzugt mit einem Tauchmaß grösser als 0,05mm erreicht. Nach oben wird das Tauchmaß von der Steifigkeit des Werkzeuges begrenzt. Werte bis 1mm sind günstig. Besonders bei weichen und grossen Werkzeugen kann dieser Wert jedoch auch deutlich übertroffen werden.

Ein Tauchmaß ist sowohl in radialer als auch axialer Richtung zu der Rotationsachse des Werkzeuges möglich. Auch eine Kombination der beiden Richtungen ist möglich. Wird jedoch ein radiales Tauchmaß verwendet, sind Werkzeuge mit einem Durchmesser über 3mm bevorzugt.

Eine weitere wichtige Eigenschaft für die Prozessstabilität und die Regelbarkeit ist die zeitliche Veränderung des Abstandes zwischen Werkzeugreferenzpunkt und Werkstückgeometrie. Es ist bevorzugt, dass sich dieser Abstand in Summe über einen Zeitraum von 10 Sekunden nicht mehr verändert, als die Grösse des initialen Tauchmaß.

Bei großen Dentalrestaurationen kann ein vorgegebenes Tauchmaß dazu führen, dass beim Polierbeginn ein intensiver Materialabtrag erfolgt, aber beim Polierende aufgrund des Werkzeugverschleißes nahezu kein Polieren mehr stattfindet. Hier kommt die Ausprägung gemäß Anspruch 2 besonders vorteilhaft zum Einsatz, die ein dynamisches Nachstellen während des Poliervorganges ermöglicht.

In vorteilhafter Ausgestaltung der Erfindung wird die Federkonstante der Polieranordnung berücksichtigt. Die Federkonstante lässt sich mit dem Tauchmaß verknüpfen. Bei dem Nenn-Werkzeugdurchmesser ist das festgelegte Tauchmaß der Quotient aus Anpresskraft und Federkonstante.

Wenn die erwünschte Anpresskraft beispielsweise 4N betragen soll und beispielsweise die gemittelte Federkonstante 10N/mm betragen kann, wird zunächst als Start-Tauchmaß durch die Steuervorrichtung ein Wert von 0,4mm festgelegt. Dieser Wert wird dynamisch erhöht, während das Werkzeug verschleißt.

In vorteilhafter Ausgestaltung der Ausprägung der Erfindung gemäß Anspruch 2 ist es möglich, die Vorweg-Berechnung der Bewegungsbahn entfallen zu lassen und adaptiv eine Bewegungsbahn zu berechnen und festzulegen. Der Sensor oder die Kamera regelt über die Steuervorrichtung adaptiv das Tauchmaß, so dass die Relativbewegung zwischen Werkstück und Werkzeug hinsichtlich des Abstand oder der Kraft zwischen diesen dauernd nachgeregelt wird.

Bei dieser Lösung ist die Steuervorrichtung in der CNC-Maschine oder in der CAM-Software integriert.

Die Steuervorrichtung legt das Tauchmaß fest. Aus Gründen der guten Polierwirkungen ist es günstig, wenn der Anpressdruck in einem optimalen Arbeitsbereich liegt. Bei gängigen Abmessungen und Durchmessern von Polieranordnungen im Dentalbereich zwischen z.B. 8 mm und 12 mm wäre ein optimaler Arbeitsbereich für den Anpresskraft um 4 N, also beispielsweise zwischen 3 und 6 N. Bei Werkzeugen mit geringerem Durchmesser verringert sich die Soll-Anpresskraft. Grundsätzlich gilt, je geringer der Werkzeugdurchmesser, desto geringer die Anpresskraft. Bei 3mm Werkzeugen evtl. 2N. Bei 10mm Werkzeugen eher 4N. 8mm bis 12mm sind hier bevorzugt, aber die Funktion ist von 3 bis über 15mm gewährleistet.

Aufgrund der Abhängigkeit dieser Parameter über den vorstehend genannten Quotienten ergibt sich, dass eine geringe Federkonstante günstig ist.

Wenn jedoch die Polieranordnung überdrückt wird, also so zusammengedrückt wird, dass der Polierkern wirksam wird, ergibt sich ein steiler Anstieg der Federkonstante. Dieser Arbeitspunkt soll nach Möglichkeit vermieden werden. Es ist daher eine Polieranordnung mit einer mittleren Federkonstante von z.B. 10 Newton pro Millimeter günstig.

Es ist besonders günstig, wenn die Steuervorrichtung vorab eine virtuelle Bewegungsbahn ablegt, z.B. in einem Speicher. Diese entspricht der Kontur des Werkstücks, jedoch vermindert um das Tauchmaß. Vermindert bedeutet hier, näher an dem Werkstück dran, als es dem tatsächlichen Durchmesser der Polieranordnung entspricht. Wenn also anstelle des Polierwerkzeugs mit den gleichen Daten ein Fräswerkzeug eingesetzt würde, würde ein erheblich stärkerer Werkstoffabtrag erfolgen.

Die virtuelle Bewegungsbahn ermöglicht die einfache Programmierung und Festlegungen über Fräsdaten, beispielsweise im Format STL.

In weiterer vorteilhafter Ausgestaltungen werden die Präparationsgrenze und die sonstigen scharfen Kanten vom Polieren ausgenommen. Dies kann auch in der virtuellen Bewegungsbahn vorab so realisiert werden, indem an diesen Stellen ein negatives Tauchmaß eingestellt wird oder die Werkstückgeometrie an der ausgenommenen Stelle um eine virtuelle Schutzgeometrie erweitert wird. Dadurch lässt sich der signifikante Verschleiß des Werkzeugs an diesen Stellen komplett vermeiden.

Es ist auch möglich, vorab für typische Dentalrestaurationen Testreihen hinsichtlich des günstigen Tauchmaßes durchzuführen. Jetzt werden z.B. für Kronen in drei verschiedenen Größen Testpoliervorgänge durchgeführt, mit unterschiedlichen Werten für das Tauchmaß. Zudem könne für die Beurteilung der erforderlichen Nachstellgeschwindigkeit zur Verschleißkompensation solche Testpoliervorgänge durchgeführt werden, um festzustellen, wie schnell sich das Tauchmaß über die Zeit verändert.

Dieses lässt sich dadurch optimieren, und es wird für eine Krone gleicher Art dann für die Praxis ein Soll-Tauchmaß festgelegt, das aber per Nachstellenänderbar ist.

In vorteilhafter Ausgestaltung der Erfindung kann auch die Polierkraft gemessen werden. Dies gilt sowohl für die Testreihe als auch in der Praxis. Beispielsweise kann dies dadurch erfolgen, dass die Stromaufnahme der Werkzeugmaschine ermittelt wird. Diese erhöht sich mit zunehmender Polierkraft und vermindert sich mit abnehmender Polierkraft, sodass über die Stromaufnahme der Werkzeugmaschine die Polierkraft bestimmbar ist. Alternativ lässt sich die Polierkraft auch über einen Kraftsensor, oder über die Drehzahlreduktion der Werkzeugmaschine ableiten oder bestimmen.

Mit herkömmlichen Poliervorrichtungen wird kurzerhand eine Fräsbahn von der mit dem Polierwerkzeug bestückten Fräsmaschine nachgefahren. Dies führt jedoch in der Regel zu einem unbefriedigenden Polierergebnis. In vorteilhafter Ausgestaltung der Erfindung ist es vorgesehen, dass die Polieranordnung auf einer Fläche des Werkstücks aufsetzt und die Bewegungsbahn in Richtung einer Kante des Werkstücks verläuft.

Besonders günstig in diesem Zusammenhang ist es, wenn die Bewegungsbahn quer zur Drehrichtung der Polieranordnung verläuft, also beispielsweise parallel zur Achse des die Polieranordnung tragenden Polierwerkzeug.

Die aus Polieranordnung und Polierkern bestehende Poliereinheit kann in beliebiger geeigneter Weise ausgestaltet sein. Die Polieranordnung kann beispielsweise Borsten oder Lamellen aufweisen. Diese erstrecken sich vom Polierkern radial nach außen oder mindestens teilweise radial nach außen. Eine schräge Erstreckung kann auch für die Bildung einer kegelförmigen Poliereinheit verwendet werden.

Die Borsten oder Lamellen können auch abgewinkelt sein, sodass sich eine napfförmige Form der Poliereinheit ergibt. Bevorzugt ist die axiale Spitze der Poliereinheit, an der die Winkelgeschwindigkeit gleich Null ist, außer Eingriff mit dem Werkstück, sodass dort auch kein Verschleiß entsteht. Bei einer axialen Spitze der Poliereinheit sollte daher der Winkel der Achse zur Oberfläche deutlich von 90 Grad abweichen, z.B. weniger als 80 Grad betragen.

Ein Polierwerkzeug besteht aus der Poliereinheit und dem Schaft. Der Schaft ist in einer Spindel der Werkzeugmaschine eingespannt oder dort einspannbar. Der Schaft kann auch aus Federstahl bestehen, was die Federkonstante des Polierwerkzeugs beeinflusst, z.B. erhöht. Dies kann in manchen Anwendungsfällen günstig sein.

Alternativ kann ein nachgiebiges Werkzeug auch folgendermaßen realisiert sein:
Das Werkzeug ist dreiteilig ist, mit dem Kern = Schaft aus Stahl, einem Innenring = weicher Schwamm, und einem Aussenring = Poliermedium.

In vorteilhafter Ausgestaltung ist es vorgesehen, dass mehrere Durchgänge mit versetzten Bewegungsbahnen realisiert werden. Es kann der Bahnabstand grösser gewählt werden, und dafür mehrere Durchgänge um halbe Bahnabstände versetzt durchfahren werden. Ein Beispiel hierfür:
1. Alle Flächen mit Bahnabstand 0,3mm polieren
2. Alle Flächen wiederholt mit Bahnabstand 0,3mm polieren, jedoch um 0,1mm versetzt zu den ersten Bahnen und in einer anderen Reihenfolge
3. Erneute Wiederholung mit 0,1mm Versatz.

Diese Ausführung reduziert die punktuellen Auswirkungen der Werkzeugveränderungen.

In weiterer vorteilhafter Ausgestaltung ist es vorgesehen, dass die Bewegungsbahnen nicht nur aus Linien auf definierter Höhe oder in Spiralform um die Kontur bestehen, sondern in kreisenden oder "hoch/runter/vor/zurück"-Bewegungen, ähnlich wie dies beim Trochoidalfräsen vorgesehen ist.

In weiterer vorteilhafter Ausgestaltung ist eine besondere Reihenfolge der zu polierenden Flächen vorgesehen, Entweder: Mit neuem, filigranen Werkzeug die tiefen Fissuren polieren. Oder: Erst die Flächen polieren und dann das alte Werkzeug opfern, indem es in die Fissuren gedrückt wird.

Die Alternative besteht in folgender Überlegung: Das Werkzeug wird mit Abnutzung feinkörniger und die Oberflächenqualität erhöht sich bei erneutem Poliervorgang, aufgrund der verändernden Werkzeugeigenschaften. Bewegungsrichtung des Werkzeuges über andere Eigenschaften als der hinterhereilende Teil des Werkzeuges verfügt, kann dazu führen, dass der Poliervorgang beschleunigt werden kann.

In weiterer vorteilhafter Ausgestaltung ist es vorgesehen, dass vordefinierte Werkzeugbahnen unabhängig von Geometriedaten der Restauration, insbesondere abhängig von der Blockgrösse bzw. der Geometrie festgelegt werden.

Die Steuervorrichtung weist eine Tauchmaßsteuereinheit auf, mit welcher das Tauchmaß nachstellbar ist. Die Nachstellung erfolgt entweder basierend auf Prozessparametern, oder basierend auf dem Messergebnis eines Sensors, insbesondere eines Sensors, wie er hier im übrigen beschrieben ist

Es ist besonders günstig, dass eine vorhandene Dental-Werkzeugmaschine, z.B. eine Fräsmaschine, für das Verfahren verwendet werden kann. Durch Bestückung mit einem handelsüblichen Polierwerkzeug und mit einer angepassten Software, die die Steuervorrichtung bildet, lässt diese sich als Dental-Poliervorrichtung verwenden.

In vorteilhafter Ausgestaltung ist es vorgesehen, dass die Polieranordnung Teil eines Polierwerkzeugs ist, das mit dem Antrieb drehfest verbindbar, insbesondere mit seinem Schaft in die Werkzeugspindel des Antriebs einspannbar ist, und dass die Polieranordnung mit dem Schaft des Polierwerkzeugs drehfest verbunden ist.

In einer weiteren vorteilhaften Ausgestaltung ist es vorgesehen, dass die Steuervorrichtung die Bewegungsbahn nachstellt, wenn eine, insbesondere über die je vorliegende Stromaufnahme des Dreh-Antriebs der Werkzeugmaschine gemessene, Polierkraft einen vorgegebenen Wert unterschreitet.

In einer weiteren vorteilhaften Ausgestaltung ist es vorgesehen, dass die Steuervorrichtung die Bewegungsbahn so steuert, dass die Polieranordnung auf einer Fläche des Werkstücks auf dieses aufsetzt und die Bewegungsbahn je eine Richtung von der Fläche des Werkstücks, insbesondere von der Mitte der Fläche, zur benachbarten Kante des Werkstücks hat.

Weitere Einzelheiten, Vorteile und Merkmale der Erfindung ergeben sich aus der nachfolgenden Beschreibung mehrerer Ausführungsbeispiele der Erfindung anhand der Zeichnung.

Es zeigen:
- Fig. 1: eine beispielhafte Ansicht eines Polierwerkzeug für die Ausführung eines Verfahrens in einer Ausführungsform;
- Fig. 2: eine schematische Ansicht einer Ausführungsform einer Dental-Poliervorrichtung zur Ausführung eines Verfahrens zum Betrieb einer Dental-Poliervorrichtung;
- Fig. 3: ein Diagramm zur Darstellung des Anpressdruck, aufgetragen über das Aufmaß als Differenz zwischen Werkzeugdurchmesser und CNC-Durchmesser; und
- Fig. 4: eine Darstellung eines Modells zur Berechnung der virtuellen Bewegungsbahn zur Realisierung des Verfahrens;
- Fig. 5: eine schematische Darstellung einer Ausführungsform mit einer Boundingbox an dentalen Indikationen;
- Fig. 6: eine schematische Darstellung der Presskraft aufgetragen über die Bearbeitungszeit oder die Bearbeitungsdistanz;
- Fig. 7: eine schematische Darstellung einer adaptiven Regelung der Bewegungsbahn, in einer Ausführungsform gemäß Anspruch 3; und
- Fig. 8: eine schematische Darstellung einer Bewegungsbahn, in einer Ausführungsform gemäß Anspruch 1.

In Fig. 1 ist eine Dental-Polierwerkzeug 10 schematisch dargestellt. Dieses umfasst eine Poliereinheit 12. Die Poliereinheit 12 besteht aus einer Polieranordnung 14 und einem Polierkern 16. Die Poliereinheit 12 ist auf einem Schaft 18 gelagert und bildet mit diesem zusammen das Polierwerkzeug 10.

Der Schaft 18 ist dazu bestimmt, von der Werkzeugspindel einer Werkzeugmaschine geführt und eingespannt gehalten zu werden.

In dem dargestellten Ausführungsbeispiel besteht die Polieranordnung 14 u.a. aus einer Mehrzahl von sie kreisförmig erstreckenden Lamellen 20. Die Lamellen 20 sind je in dem Polierkern 16 verankert und erstrecken sich in an sich bekannter Weise leicht schräg radial aus diesem heraus. Sie sind mit körnigen Schleifmitteln bestückt und dienen der Polierwirkung.

Für das Polieren werden sie an einem Dentalrestaurationsteil 22, das zugleich ein Werkstück 22 ist, entlang geführt.

Hierbei wird eine Polierkraft ausgeübt, die dazu führt, dass die Lamellen 20 in Richtung Polierkern 16 gedrückt werden, oder teilweise seitlich weggedrückt werden, dass also die Polieranordnung 14 eingedrückt wird.

Dieses grundsätzliche Prinzip ist an sich bekannt und die Schilderung hier dient zur Verdeutlichung der verwendeten Bezeichnungen.

Bei der beispielhaften Ausführungsform ist der Durchmesser der Polieranordnung 14 9 mm und der des Polierkerns 4 mm.

Das Werkstück 22 ist in Fig. 2 dargestellt. In Fig. 2 ist ferner die Poliervorrichtung 24 dargestellt, und zwar einmal im Stirnansicht links und in Seitenansicht rechts. Die Poliervorrichtung 24 besteht aus dem Werkstück 22 und der Polieranordnung 14.

Es ist vorgesehen, dass die Poliereinheit 12 so über das Werkstück 22 geführt wird, dass ein konstantes oder im Wesentlichen konstantes Tauchmaß 26 vorliegt.

Hierzu wird von einem bekannten Werkzeugdurchmesser 28 ausgegangen. Dieser entspricht dem Durchmesser des Werkzeugs in unbenutztem Zustand. Das Polierwerkzeug 10 ist in eine CNC-Werkzeugmaschine 30 eingespannt, und das Werkzeug 10 wird so über die Oberfläche des Werkstücks 22 geführt, dass das Tauchmaß 26 entsteht. Hierzu wird für die CNC-Daten angenommen, dass das Werkzeug 10 einen Durchmesser hat, der sich um das Tauchmaß 26 von dem Werkzeugdurchmesser 28 unterscheidet. Dieser Durchmesser wird als CNC-Durchmesser 32 bezeichnet.

Die Steuerung wird basierend auf einem Werkzeugreferenzpunkt 34 vorgenommen. Dieser liegt im Beispielsfall auf der Achse 36 des Polierwerkzeugs 10.

Es ist eine schematisch dargestellte Steuervorrichtung 40 vorgesehen, die Teil der CNC-Werkzeugmaschine 30 ist. Die Steuervorrichtung 40 steuert die Bewegung des Werkzeugreferenzpunktes 34 im Raum und auch die Bewegung des Werkstücks 22 im Raum. Aus der Bewegungsdifferenz ergibt sich die Relativbewegung zwischen Werkzeug 10 und Werkstück 22 und damit die Bewegungsbahn 38, zugleich also die Relativbewegung zwischen dem Werkzeug 10 und dem Werkstück 22. In der in Fig. 2 rechts dargestellten Ansicht erfolgt die Bewegungen in der Darstellung der Zeichnung von rechts nach links, also im Wesentlichen parallel zur Achse 36.

Der Materialabtrag und insbesondere die Materialumformung erfolgt quer zu dieser Bewegungsbahn 38, in der Zeichnungen in Fig. 2 rechts in die Zeichnungsebene hinein oder aus dieser heraus.

Während des Poliervorgangs tritt ein Verschleiß des Werkzeugs 10 auf. Dieser Verschleiß führt auch dazu, dass der tatsächliche aktuelle Werkzeugdurchmesser kleiner ist als der Werkzeugdurchmesser 28.

Um dies zu kompensieren, wird die Bewegungsbahn 38 nachgestellt, und zwar in Richtung einer stärkeren Annäherung zwischen dem Werkzeugreferenzpunkt 34 und dem Werkstück 22.

Diese Änderung der Bewegungsbahn 38 wird von der Steuervorrichtung 40 gesteuert. Die Steuerung erfolgt basierend auf beliebigen geeignet gewählten Parametern, beispielsweise dem Vortrieb, dem Material des Werkstücks, der Form des Werkstücks, dem Material der Polieranordnung, der Form der Polieranordnung 14 und/oder dem Anpressdruck zwischen der Polieranordnung 14 und dem Werkstück 22.

In einer weiteren Ausführungsform wird ein Sensor 42 eingesetzt, der mit der Steuervorrichtung 40 verbunden ist und die Bewegungsbahn 22 nachstellt. Mit dem Sensor wird die Polieranordnung 14 und/oder werden die Abmessungen des Werkstücks 22 gemessen, und zwar bevorzugt laufend.

Der Sensor 42 ist bevorzugt ein optischer Sensor oder eine Kamera. Es ist aber auch möglich, anstelle dessen einen mechanischen Sensor sowie einen Tastfühler oder einen akustischen Sensor einzusetzen, oder anstelle des Sensors die Signale der Steuervorrichtung auszuwerten.

Wie aus Fig. 2 im Vergleich mit Fig. 1 ersichtlich ist, ist die radiale Erstreckung der Polieranordnung 14, also die radiale Länge der Lamellen 20, deutlich größer als das Tauchmaß 26, entsprechend der Differenz zwischen dem Werkzeug-durchmesser 28 und dem CNC-Durchmesser 32.

Dadurch wird ein Überdrücken der Polieranordnung 14 sicher verhindert. Das Überdrücken hätte den Nachteil, dass der Verschleiß extrem hoch wird und zudem die Elastizität drastisch sinkt.

Demgegenüber ist in dem erwünschten Bereich des Tauchmaßes 26 die Federkonstante im Wesentlichen gleichbleibend. Die Polieranordnung 14 ist elastisch und verformt sich mit im Wesentlichen gleichbleibender Federkonstante beim Auftreffen auf die Oberfläche des Werkstücks 22.

Wie bereits erwähnt, ist die Federkonstante der Quotient aus der Anpresskraft und dem Tauchmaß 26. Umgekehrt lässt sich das Tauchmaß 26 aus dem Quotienten Anpresskraft durch Federkonstante berechnen.

Beispielsweise ergibt sich bei einer Anpresskraft von 4 N und einer Federkonstante von 5 N/mm ein Tauchmaß von 0,8 mm.

Eine geringe Federkonstante ermöglicht einen großen Arbeitsbereich. Hierzu sei auf die nachstehende Grafik in Fig. 3 verwiesen. Dort ist der Anpressdruck über das Tauchmaß 26 aufgetragen.

In dem dargestellten Ausführungsbeispiel beträgt die optimale Anpresskraft 3N und der optimale Arbeitsbereich liegt zwischen 2,5 N und 3,5 N. Der Anpressdruck, also die Anpresskraft pro Flächeneinheit ist für die Polierwirkung entscheidend.

Es ist günstig, durch die Nachgiebigkeit der Polieranordnung 14 einen im Wesentlichen konstanten Anpressdruck zu erzielen, mit einer relativen Unabhängigkeit vom Tauchmaß.

In diesem Ausführungsbeispiel ist die Anpresskraft höher als bei dem vorstehend genannten Ausführungsbeispiel. Dementsprechend ist der optimale Arbeitsbereich in Richtung größeres Tauchmaß verschoben, entsprechend einem Überdrücken der Polieranordnung 14.

Bei diesem ist die höhere Federkonstante des steifen Zentrums, also des Polierkerns 16 wirksam, mit den entsprechenden Nachteilen.

Eine Lösung besteht darin, eine Federvorspannung des Schafts 18 zu realisieren, beispielsweise, indem man diesen aus Federstahl oder in der vorstehend beschriebenen dreiteiligen Ausführung fertigt.

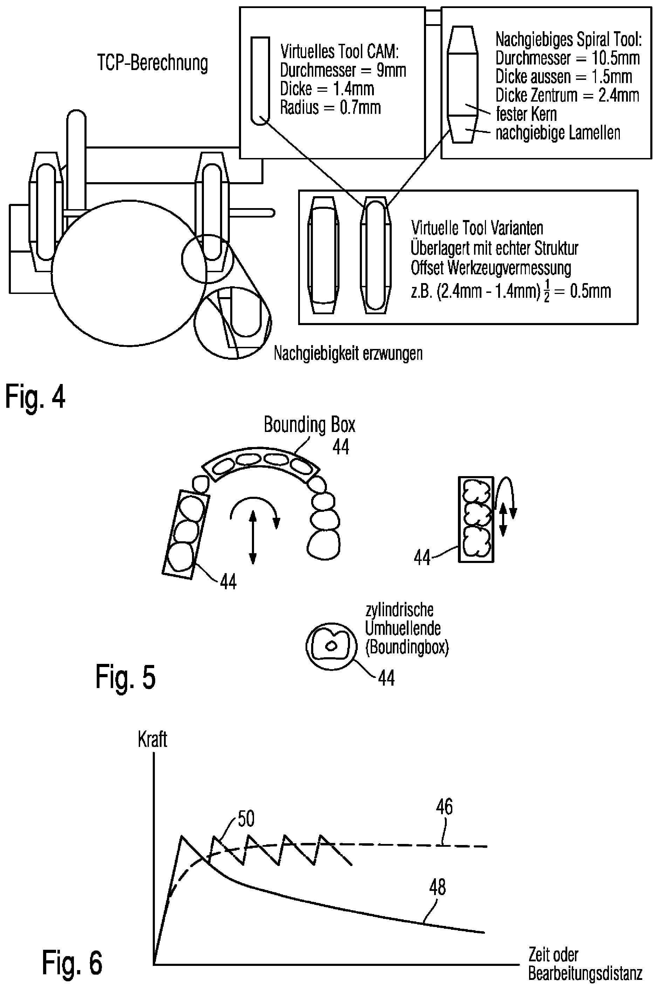

Mit der Federvorspannung ergibt sich dann wieder eine flache Kennlinie
Fig. 4 zeigt eine Berechnung des Referenzpunkts 34 des Werkzeugs, der hier als TCP = Tool center point bezeichnet ist. Es wird für die CAM-Software ein virtuelles Werkzeug bereitgestellt, mit einem Durchmesser von 9 mm und den weiteren angegebenen Dimensionen.

Die Polieranordnung 14 ist dort als nachgiebiges spiral tool bezeichnet. Sie besteht aus dem festen Polierkern 18 und den Lamellen 20. Die Lamellen 20 verlaufen nach außen spitz zu, so dass ihre Dicke außen geringer ist als innen.

Unten in Fig. 4 ist eine Überlagerung des virtuellen Werkzeugs mit dem tatsächlichen Werkzeug dargestellt. Bei den dort angegebenen Maßen ergibt sich ein Offset von ca. 0,5 mm.

Die angegebenen Maße sind lediglich beispielhaft und können in weiten Bereichen an die Erfordernisse angepasst werden.

In Fig. 5 ist eine alternative Ausführungsform mit einer sogenannten Boundingbox 44 dargestellt. Unter einer Boundingbox versteht man eine virtuelle Geometrie oder "Box" , innerhalb derer das zu bearbeitende Objekt liegt.

Die Boundingbox 44 kann entweder mittels der Sensorik mit Abstandsmessung von Werkzeug und Dentalobjekt generiert werden oder mittels der CAM-Software.

Mittels einer Boundingbox 44 wird beispielsweise eine in der Draufsicht bogenförmige oder quaderförmige Umhüllung der zu polierenden Indikation gelegt, wie dies in Fig. 5 dargestellt ist. Hierdurch ist es nicht erforderlich, dass die 3D-Konturdaten der Dentalindikation abgefahren werden müssen. Die Bewegungsbahn 22 kann auch virtuell angelegt sein, z.B. in der Boundingbox 44.

Es ist denkbar, dass die Boundingbox in der CAM automatisch berechnet wird, oder mittels einer Sensorik in der Fräsmaschine das Polierwerkzeug mit einem vorbestimmten Abstand zu den zu polierenden Indikationen verfahren wird.

Eine Schutzgeometrie kann aus einem virtuellen Volumenkörper bestehen, der die Kavität füllt und so die Kanten der Präparationsgrenzen glättet. Die Kavität wird bis auf die Höhe des Tauchmaßes über die Präparationsgrenze mit einem Volumenkörper gefüllt.

Die Boundingbox kann komplett unabhängig von 3D-Daten definiert werden. Bspw. Können blockspezifische Bewegungsbahnen "Boundingboxen" oder Indikationspezifische Programme: "Inlay", Krone, Brücke, Teilprothesen, Prothesenbasis, etc. realisiert werden. Oder es wird z.B. eine Zylinder-Boundingbox um 3D-Daten (STL-Daten) gelegt, als Vorbereitung für eine Schlichtbearbeitung. Dann wird das Polieren mit einem konstanten Radius durchgeführt, Es werden dabei jedoch nicht die Konturen abgefahren. Die Boundingbox wird mit minimalem Abstand um die Konturen gelegt und dann nach aussen bis zu einem maximalen Tauchmass an der höchsten Stelle gestreckt

Die Boundingbox wird mit minimalem Abstand um die Konturen gelegt und dann nach aussen bis zu einem maximalen Tauchmaß an der höchsten Stelle gestreckt.

Fig. 6 zeigt ein Diagramm zur Darstellung der Presskraft, aufgetragen über die Zeit oder die Bearbeitungsdistanz.

Die gestrichelte Kurve 46 zeigt den idealen Verlauf: Es besteht eine konstante Kraft über gesamte Polierdauer.

Die durchzogene Kurve 48 zeigt den realen Verlauf: Nach dem Eintauchen fällt die Kraft ab.

Eine Annäherung an den idealen Verlauf ist möglich über ein regelmäßig wiederkehrendes oder kontinuierlichem Nachstellen des Tauchmaßes, gemäß der Kurve 50.

Eine adaptives Verfahren zum Betrieb einer Dental-Poliervorrichtung, die eine Poliereinheit aufweist, die von einer Dental-Werkzeugmaschine angetrieben wird, welche Poliereinheit aus einem kreisrunden Polierkern und einer kreisrunden und insbesondere den Polierkern umgebenden Polieranordnung besteht, wobei die Poliervorrichtung auch ein zu polierendes Werkstück aufweist, und wobei die Polieranordnung sich bei Anlage an dem Werkstück elastisch verformt, ist vorgesehen.

Eine numerisch gesteuerte Steuervorrichtung bewegt die Polieranordnung entlang einer Bewegungsbahn an dem Werkstück relativ zu diesem.

,Das Werkstück taucht um ein konstantes oder im wesentlichen konstantes Tauchmaß in die Polieranordnung ein und stellt die Steuervorrichtung die Tauchmaß nach, basierend auf Prozessparametern.

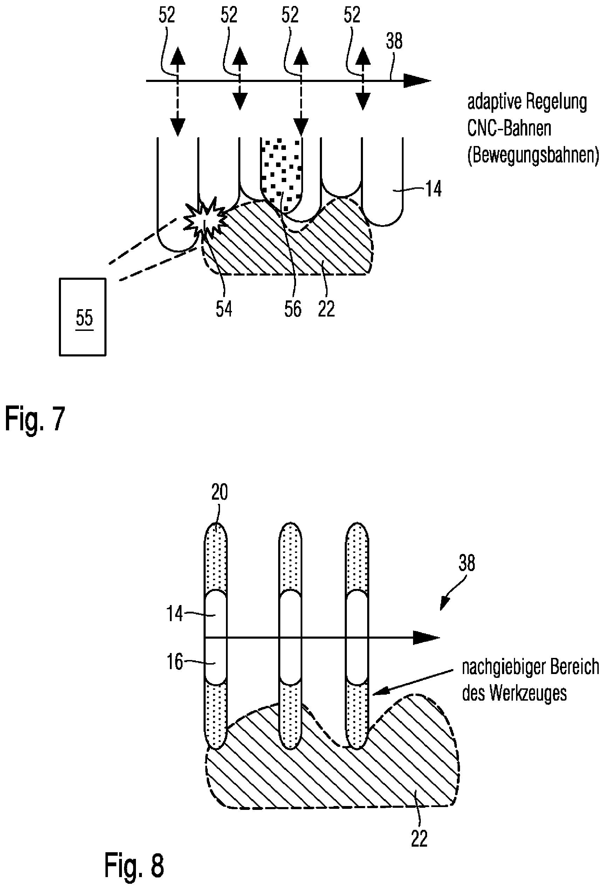

Die Regelung der Bewegungsbahn 38 ist in Fig. 7 dargestellt. Die tatsächliche Bewegungsbahn des Referenzpunktes 34 verläuft nicht horizontal, sondern mit vertikaler Auslenkung, entsprechend den Pfeilen 52. Auf eine Bahnberechnung wird verzichtet, aber es wird eine gespeicherte Bewegungsbahn abgefahren. Die Bewegungsbahn kann in einem zweidimensionalen Raster vorliegen. Auch ein dreidimensionale Bewegungsbahn, z.B. in Zylinderform, ist möglich.

Sobald es bei der horizontalen Bewegung zum Kontakt 54 kommt, entsteht ein Geräusch. Dieses Geräusch wird von einem akustischen Sensor 55 erfasst. Das Polieren beginnt, und die Bewegungsbahn, und damit das Tauchmaß, wird kontinuierlich nachgestellt.

Sobald die Oberfläche des Werkstücks zurückspringt, wie es bei oder knapp vor der Position 56 der Polieranordnung 14 dargestellt ist, geht der Kontakt verloren, oder wird schwächer. Diese Geräuschänderung wird vom Sensor 55 erfasst, und über die Steuervorrichtung die Bewegungsbahn 38 nachgestellt.

Aus Fig. 8 ist eine Ausführungsform ohne adaptive Bahnregelung ersichtlich. Die Lamellen 20 der Polieranordnung 14 sind nachgiebig und folgen der Kontur des Werkstücks 22. Dies erfordert ein ausreichend nachgiebiges Werkzeug, und es wird ein vordefiniertes Poliermuster abgefahren.

Es wird ein beliebiger Prozessparameter ausgewählt, der mit dem Werkzeugverschleiß korreliert ist. Hierzu wird das empirisch ermittelte oder in individuellen Versuchsreihen bestimmte Verschleißverhalten herangezogen. Sobald basierend auf diesem ein Verschleiß des Werkzeug festgestellt wird, erfolgt ein Nachstellen der Bewegungsbahn zum Werkstück 22 hin, in der Darstellung gemäß Fig. 8 ein Absenken der Polieranordnung 14 nach unten.

## Patentansprüche

1. Verfahren zum Betrieb einer Dental-Poliervorrichtung, die eine Poliereinheit aufweist, die von einer Dental-Werkzeugmaschine angetrieben wird, welche Poliereinheit aus einem kreisrunden Polierkern und einer kreisrunden und insbesondere den Polierkern umgebenden Polieranordnung besteht, wobei die Poliervorrichtung auch ein zu polierendes Werkstück aufweist, und wobei die Polieranordnung sich bei Anlage an dem Werkstück elastisch verformt, wobei eine numerisch gesteuerte Steuervorrichtung (40) die Polieranordnung (14) entlang einer Bewegungsbahn (38) an dem Werkstück (22) relativ zu diesem bewegt, bei welcher das Werkstück (22) mit einem konstanten oder im wesentlichen konstanten Tauchmaß (26) in die Polieranordnung (14) eintaucht und die Steuervorrichtung (40) das Tauchmaß (26) nachstellt, basierend auf Prozessparametern, wobei mindestens eine Abmessung des Werkstücks (22) vor der Ausführung einer Bewegungsbahn (38) über einen Sensor gemessen wird, und dass die Steuervorrichtung (40) die Bewegungsbahn (38) der Poliereinheit (12) vor deren Ausführung festgelegt,
**dadurch gekennzeichnet, dass**
die Polieranordnung (14) einen mit der Drehgeschwindigkeit zunehmenden Durchmesser (32) hat und das Tauchmaß (26) bezogen auf diesen ggf. vergrößerten Durchmesser (32) festgelegt wird, wobei insbesondere die Drehgeschwindigkeit an das erwünschte Tauchmaß (26) angepasst ist.

2. Verfahren zum Betrieb einer Dental-Poliervorrichtung nach Anspruch 1, **dadurch gekennzeichnet, dass** zu den Prozessparametern empirisch ermittelte oder in individuellen Versuchsreihen bestimmte Verschleißverhalten der Polieranordnung (14) gehören und dass die Prozessparameter insbesondere in Abhängigkeit stehen von dem Vortrieb, dem Material des Werkstücks (22), der Form des Werkstücks (22), dem Material der Polieranordnung (14), der Form der Polieranordnung (14) und/oder dem Anpresskraft zwischen Polieranordnung (14) und Werkstück (22).

3. Verfahren zum Betrieb einer Dental-Poliervorrichtung nach einem der vorhergehenden Ansprüche, **dadurch gekennzeichnet, dass** das vorgegebene Tauchmaß (26) bei Polieranordnungen mit einem Durchmesser von bis zu 3 mm größer als 0,05 mm und kleiner als 0,5 mm ist, und bei Werkzeugen mit einem Durchmesser von mehr als 3 mm größer als 0,2 mm und kleiner als 2 mm ist.

4. Verfahren zum Betrieb einer Dental-Poliervorrichtung nach einem der vorhergehenden Ansprüche, **dadurch gekennzeichnet, dass** die numerisch gesteuerte Steuervorrichtung (40) einen Speicher aufweist, in welchem eine virtuelle Bewegungsbahn (38) abgelegt ist, der der Kontur des Werkstücks (22) entspricht, jedoch um ein vorgegebenes Tauchmaß (26) vermindert, also näher an dem Werkstück (22), als es dem tatsächlichen Durchmesser der Polieranordnung (14) entspricht, ggf. unter Berücksichtigung eines Werkzeugreferenzpunktes (34) .

5. Verfahren zum Betrieb einer Dental-Poliervorrichtung nach einem der vorhergehenden Ansprüche, **dadurch gekennzeichnet, dass** die Steuervorrichtung (40) bei einem Dentalrestaurationsteil (20) als Werkstück (22) Präparationsgrenzen des Dentalrestaurationsteils (20) von dem Polieren ausnimmt, also an den Präparationsgrenzen ein negatives Tauchmaß (26) vorgibt, oder eine virtuelle Schutzgeometrie über ausgenommene Flächen eingefügt wird.

6. Verfahren zum Betrieb einer Dental-Poliervorrichtung nach einem der vorhergehenden Ansprüche, **dadurch gekennzeichnet, dass** ein Soll-Tauchmaß vorab festgelegt wird, basierend auf mindestens einer Messreihe, die eine Funktion des Tauchmaßes (26) über eine Polierkraft wiedergibt, gemessen insbesondere über die je vorliegende Stromaufnahme oder Drehzahl des Dreh-Antriebs der Werkzeugmaschine (34).

7. Verfahren zum Betrieb einer Dental-Poliervorrichtung nach einem der vorhergehenden Ansprüche, **dadurch gekennzeichnet**, die Steuervorrichtung (40) aus dem Abfall der Polierkraft bei einem vorgegebenen Tauchmaß (26) den Verschleiß der Polieranordnung (14) bestimmt und ein Signal abgibt, wenn die Polierkraft bei dem vorgegebenen Tauchmaß (26) einen Schwellwert unterschreitet, und dass insbesondere das Signal die Kompensationsbewegung nachstellt und/oder einen Werkzeugwechsel anzeigt.

8. Verfahren zum Betrieb einer Dental-Poliervorrichtung nach einem der vorhergehenden Ansprüche, **dadurch gekennzeichnet**, die Steuervorrichtung (40) die Relativbewegung zwischen Werkstück (22) und Polieranordnung (14) entlang der Bewegungsbahn (38) so steuert, dass die Bewegungsgeschwindigkeit, während der Anlage, größer als ein Minimalwert, insbesondere 5 mm/sec, bevorzugt 10 mm/sec und kleiner als ein Maximalwert, insbesondere 30 mm/sec, bevorzugt 20 mm/sec ist.

9. Verfahren zum Betrieb einer Dental-Poliervorrichtung nach einem der vorhergehenden Ansprüche, **dadurch gekennzeichnet, dass** die Polieranordnung (14) ausschließlich in Bereichen außerhalb der Achse und/oder einer etwaigen Spitze der Polieranordnung (14) in Anlage mit dem Werkstück (22) gebracht wird.

10. Verfahren zum Betrieb einer Dental-Poliervorrichtung nach einem der vorhergehenden Ansprüche, **dadurch gekennzeichnet, dass** die Polieranordnung (14) Borsten oder Lamellen (20) aufweist, die sich kreisförmig, tellerförmig, napfförmig oder kegelförmig um den Polierkern (16) erstrecken.

11. Dental-Poliervorrichtung, die eine Poliereinheit aufweist, die in Antriebsverbindung mit einer Dental-Werkzeugmaschine steht, welche Poliereinheit aus einem kreisrunden Polierkern und einer kreisrunden und insbesondere den Polierkern umgebenden Polieranordnung besteht, wobei die Poliervorrichtung auch ein zu polierendes Werkstück aufweist, und wobei die Polieranordnung sich bei Anlage an dem Werkstück elastisch verformt, wobei eine numerisch gesteuerte Steuervorrichtung (40) vorgesehen ist, mit welcher die Polieranordnung (14) entlang einer Bewegungsbahn (38) an dem Werkstück (22) relativ zu diesem bewegbar ist, und dass die Steuervorrichtung (40) eine Tauchmaßsteuereinheit aufweist, mit welcher das Tauchmaß (26) nachstellbar ist, **dadurch gekennzeichnet, dass** die Polieranordnung (14) einen mit der Drehgeschwindigkeit zunehmenden Durchmesser (32) hat und die Dental-Poliervorrichtung ausgebildet ist, das Tauchmaß (26) bezogen auf diesen ggf. vergrößerten Durchmesser (32) festzulegen, wobei insbesondere die Drehgeschwindigkeit an das erwünschte Tauchmaß (26) angepasst ist.

12. Dental-Poliervorrichtung nach Anspruch 11, **dadurch gekennzeichnet, dass** mit der Tauchmaßsteuereinheit ein konstantes oder im wesentlichen konstantes Tauchmaß (26) einstellbar ist, mit welchem das Werkstück (22) in die Polieranordnung (14) eintaucht und dass mit der Tauchmaßsteuereinheit das Tauchmaß (26) nachstellbar ist, basierend auf Prozessparametern, oder basierend auf einem Sensor oder einer Kamera für die Erfassung mindestens einer Dimension der Polieranordnung (14) und/oder Abmessungen des Werkstücks (22), und/oder dass mit der Tauchmaßsteuereinheit das Tauchmaß (26) basierend auf dem Messergebnis nachstellbar ist.

## Claims

1. A method for operating a dental polishing device which has a polishing unit which is driven by a dental machine tool, said polishing unit consisting of a circular polishing core and a circular polishing assembly, which in particular surrounds the polishing core, wherein the polishing device also comprises a workpiece to be polished, and wherein the polishing assembly is elastically deformed when it comes into contact with the workpiece, wherein a numerically controlled control device (40) moves the polishing assembly (14) along a trajectory (38) on the workpiece (22) relative to the latter, in which the workpiece (22) is immersed into the polishing assembly (14) with a constant or substantially constant degree of immersion (26) and the control device (40) readjusts the degree of immersion (26) based on process parameters, wherein at least one dimension of the workpiece (22) is measured by a sensor before execution of a trajectory (38), and in that the control device (40) determines the trajectory (38) of the polishing unit (12) before its execution, **characterized in that** the polishing assembly (14) has a diameter (32) which increases with the rotational speed, and the degree of immersion (26) is determined in relation to this possibly increased diameter (32), wherein in particular the rotational speed is adjusted to the desired degree of immersion (26).

2. The method for operating a dental polishing device according to claim 1, **characterized in that** the process parameters include wear behavior of the polishing assembly (14) detected empirically or in individual series of tests, and **in that** the process parameters are in particular dependent on the advance, the material of the workpiece (22), the shape of the workpiece (22), the material of the polishing assembly (14), the shape of the polishing assembly (14) and/or the contact pressure between the polishing assembly (14) and the workpiece (22).

3. The method of operating a dental polishing device according to one of the preceding claims, **characterized in that** the predetermined degree of immersion (26) is greater than 0.05 mm and less than 0.5 mm for polishing assemblies with a diameter of up to 3 mm, and greater than 0.2 mm and less than 2 mm for tools with a diameter of more than 3 mm.

4. The method of operating a dental polishing device according to one of the preceding claims, **characterized in that** the numerically controlled control device (40) has a memory in which a virtual trajectory (38) is stored which corresponds to the contour of the workpiece (22), but reduced by a predetermined degree of immersion (26), i.e. closer to the workpiece (22) than corresponds to the actual diameter of the polishing assembly (14), if necessary taking into account a tool reference point (34).

5. The method for operating a dental polishing device according to one of the preceding claims, **characterized in that**, with a dental restoration part (20) as the workpiece (22), the control device (40) excludes preparation boundaries of the dental restoration part (20) from the polishing, i.e., a negative degree of immersion (26) is specified at the preparation boundaries, or a virtual protective geometry is inserted over excluded surfaces.

6. The method for operating a dental polishing device according to one of the preceding claims, **characterized in that** a target degree of immersion is determined in advance, based on at least one series of measurements which represents a function of the degree of immersion (26) via a polishing force, measured in particular via the respectively available current consumption or rotational speed of the rotary drive of the machine tool (34).

7. The method for operating a dental polishing device according to one of the preceding claims, **characterized in that** the control device (40) determines the wear of the polishing assembly (14) from the drop in the polishing force at a predetermined degree of immersion (26) and emits a signal when the polishing force falls below a threshold value at the predetermined degree of immersion (26), and **in that** in particular the signal readjusts the compensation movement and/or indicates a tool change.

8. The method for operating a dental polishing device according to one of the preceding claims, **characterized in that** the control device (40) controls the relative movement between the workpiece (22) and the polishing assembly (14) along the trajectory (38) in such a way that the speed of movement, during contact, is greater than a minimum value, in particular 5 mm/sec, preferably 10 mm/sec, and less than a maximum value, in particular 30 mm/sec, preferably 20 mm/sec.

9. The method for operating a dental polishing device according to one of the preceding claims, **characterized in that** the polishing assembly (14) is brought into contact with the workpiece (22) exclusively in regions outside the axis and/or any tip of the polishing assembly (14).

10. The method for operating a dental polishing device according to one of the preceding claims, **characterized in that** the polishing assembly (14) comprises bristles or flaps (20) extending in a circular, plate-shaped, cup-shaped, or cone-shaped manner around the polishing core (16).

11. A dental polishing device comprising a polishing unit which is in driving connection with a dental machine tool, said polishing unit consisting of a circular polishing core and a circular polishing assembly surrounding in particular the polishing core, wherein the polishing device also comprises a workpiece to be polished, and wherein the polishing assembly is elastically deformed when it comes into contact with the workpiece, wherein a numerically controlled control device (40) is provided, by means of which the polishing assembly (14) is movable along a trajectory (38) on the workpiece (22) relative thereto, and in that the control device (40) has a degree of immersion control unit, by means of which the degree of immersion (26) can be readjusted, **characterized in that** the polishing assembly (14) has a diameter (32) which increases with the rotational speed, and the dental polishing device is configured to determine the degree of immersion (26) in relation to this possibly increased diameter (32), wherein in particular the rotational speed is adjusted to the desired degree of immersion (26).

12. The dental polishing device according to claim 11, **characterized in that** a constant or substantially constant degree of immersion (26) with which the workpiece (22) is immersed in the polishing assembly (14) can be set with the degree of immersion control unit, and **in that** the degree of immersion (26) can be readjusted by the degree of immersion control unit, based on process parameters, or based on a sensor or a camera for recording at least one dimension of the polishing assembly (14) and/or dimensions of the workpiece (22), and/or **in that** the degree of immersion (26) can be readjusted by the degree of immersion control unit, based on the measurement result.

## Revendications

1. Un procédé de fonctionnement d'un dispositif de polissage dentaire qui présente une unité de polissage entraînée par une machine-outil dentaire, où cette unité de polissage se compose d'un noyau de polissage circulaire et d'un agencement circulaire entourant le noyau de polissage, où le dispositif de polissage présente également une pièce à polir, et où l'ensemble de polissage est élastiquement déformée lorsqu'il est en contact avec la pièce à polir, où un dispositif de commande à commande numérique (40) déplace l'ensemble de polissage (14) sur la pièce (22) par rapport à celle-ci le long d'une trajectoire (38), au cours de laquelle la pièce (22) pénètre dans l'ensemble de polissage (14) avec une profondeur de pénétration constante ou substantiellement constante (26) et le dispositif de commande (40) ajuste la profondeur de pénétration (26) en fonction des paramètres du procédé, où au moins une profondeur de la pièce (22) est mesurée par le biais d'un capteur avant l'exécution d'une trajectoire (38), et le dispositif de commande (40) ajuste la trajectoire (38) de l'unité de polissage (12) avant son exécution, **caractérisé en ce que** l'ensemble de polissage (14) présente un diamètre (32) croissant avec la vitesse de rotation et la profondeur de pénétration (26) est déterminée par rapport à ce diamètre éventuellement agrandi (32), où en particulier la vitesse de rotation est adaptée à la profondeur de pénétration souhaitée (26).

2. Le procédé de fonctionnement d'un dispositif de polissage dentaire selon la revendication 1, **caractérisé en ce que** les paramètres du procédé incluent un comportement d'usure déterminé empiriquement ou déterminé lors de séries d'essai individuelles de l'ensemble de polissage (14) et **en ce que** les paramètres du procédé dépendent en particulier de la propulsion, du matériau de la pièce (22), de la forme de la pièce (22), du matériau de l'ensemble de polissage (14), de la forme de l'ensemble de polissage (14) et/ou de la force de contact entre l'ensemble de polissage (14) et la pièce (22).

3. Le procédé de fonctionnement d'un dispositif de polissage dentaire selon l'une des revendications précédentes, **caractérisé par** la profondeur de pénétration spécifiée (26) supérieure à 0,05 mm et inférieure à 0,5 mm pour les dispositifs de polissage d'un diamètre allant jusqu'à 3 mm, et supérieure à 0,2 mm et inférieure à 2 mm pour les outils de diamètre supérieur à 3 mm.

4. Le procédé de fonctionnement d'un dispositif de polissage dentaire selon l'une des revendications précédentes, **caractérisé en ce que** le dispositif de commande à commande numérique (40) présente une mémoire dans laquelle une trajectoire virtuelle (38) est stockée, correspondant au contour de la pièce (22), mais réduite d'une profondeur de pénétration spécifiée (26), c'est-à-dire plus proche de la pièce (22) que du diamètre réel de l'ensemble de polissage (14), en tenant compte, le cas échéant, d'un point de référence de l'outil (34).

5. Le procédé de fonctionnement d'un dispositif de polissage dentaire selon l'une des revendications précédentes, **caractérisé en ce que** le dispositif de commande (40) dans le cas d'une pièce de restauration dentaire (20) comme pièce à polir (22) exclut les limites de préparation de la pièce de restauration dentaire (20) du polissage, c'est-à-dire qu'il spécifie une profondeur de pénétration négative (26) au niveau des limites de préparation, ou qu'une géométrie protectrice virtuelle sur des surfaces exclues est insérée.

6. Le procédé de fonctionnement d'un dispositif de polissage dentaire selon l'une des revendications précédentes, **caractérisé en ce qu'**une profondeur cible de pénétration est déterminée à l'avance, sur la base d'au moins une série de mesures qui reflète une fonction de la profondeur de pénétration (26) par rapport à une force de polissage, mesurée en particulier à partir de la consommation de courant ou de la vitesse actuelle de l'entraînement rotatif de la machine-outil (34).

7. Le procédé de fonctionnement d'un dispositif de polissage dentaire selon l'une des revendications précédentes, **caractérisé par** le dispositif de commande (40) détermine l'usure de l'ensemble de polissage (14) due à la chute de la force de polissage à une profondeur de pénétration donnée (26) et émet un signal si la force de polissage tombe en dessous d'une valeur seuil à la profondeur de pénétration spécifiée (26), et en particulier que le signal ajuste le mouvement compensatoire et/ou indique un changement d'outil.

8. Le procédé de fonctionnement d'un dispositif de polissage dentaire selon l'une des revendications précédentes, **caractérisé en ce que** le dispositif de commande (40) commande le mouvement relatif entre la pièce à polir (22) et l'ensemble de polissage (14) le long de la trajectoire (38) de telle sorte que la vitesse de mouvement pendant le dispositif soit supérieure à une valeur minimale, en particulier 5 ram/s, de préférence 10 ram/s et inférieure à une valeur maximale, en particulier 30 ram/s, de préférence 20 ram/sec.

9. Le procédé de fonctionnement d'un dispositif de polissage dentaire selon l'une des revendications précédentes, **caractérisé en ce que** l'arrangement de polissage (14) est mis en contact avec la pièce à polir (22) exclusivement dans des zones en dehors de l'axe et/ou d'une éventuelle pointe de l'ensemble de polissage (14).

10. Le procédé de fonctionnement d'un dispositif de polissage dentaire selon l'une des revendications précédentes, **caractérisé en ce que** l'ensemble de polissage (14) comporte des poils ou lamelles (20) qui s'étendent en forme de cercle, en forme d'assiette, en forme de cuvette ou en forme conique autour du noyau de polissage (16).

11. Dispositif de polissage dentaire qui présente une unité de polissage reliée de manière entraînante avec une machine- outil dentaire, où cette unité de polissage se compose d'un noyau de polissage circulaire et d'un ensemble de polissage circulaire entourant en particulier le noyau de polissage, où le dispositif de polissage présente également une pièce à polir, et où la configuration de polissage est élastiquement déformée lorsqu'il est mise en contact sur la pièce, où un dispositif de commande à commande numérique (40) est prévu, par lequel l'ensemble de polissage (14) peut être déplacée sur la pièce (22) par rapport à celle-ci le long d'une trajectoire (38), et le dispositif de commande (40) présente une unité de commande de profondeur de pénétration qui permet d'ajuster la profondeur de pénétration (26), **caractérisée en ce que** l'ensemble de polissage (14) présente un diamètre (32) croissant en fonction de la vitesse de rotation et **en ce que** le dispositif de polissage dentaire est conçu pour définir la profondeur de pénétration (26) par rapport à ce diamètre (32) éventuellement augmenté (32), où en particulier la vitesse de rotation est adaptée à la machine submersible souhaitée (26).

12. Un dispositif de polissage dentaire selon la revendication 11, **caractérisé en ce que** l'unité de commande de la profondeur de pénétration permet de régler une profondeur de pénétration (26) constante ou sensiblement constante, avec laquelle la pièce (22) pénètre dans l'ensemble de polissage (14) et **en ce que** l'unité de commande de la profondeur de pénétration permet d'ajuster la profondeur de pénétration (26) en fonction des paramètres du procédé, ou en fonction d'un capteur ou d'une caméra pour détecter au moins une dimension de l'ensemble de polissage (14) et/ou des dimensions de la pièce (22), et/ou que l'unité de commande de la profondeur de pénétration peut être utilisée pour ajuster la profondeur de pénétration (26) en fonction du résultat de la mesure.
